# EUROPÄISCHE PATENTSCHRIFT

(11) **EP 2 997 932 B1**
(45) Veröffentlichungstag und Bekanntmachung des Hinweises auf die Patenterteilung: **24.03.2021**
(21) Anmeldenummer: 15184704.3
(22) Anmeldetag: 10.09.2015
(51) Int. Cl.: A61C 13/265

(54) **MATRIZENTEIL ZUR BILDUNG EINER LÖSBAREN VERBINDUNG MIT EINEM IM MUND BEFESTIGBAREN PATRIZENTEIL**
FEMALE COMPONENT FOR FORMING A REMOVABLE CONNECTION WITH A MALE COMPONENT WHICH CAN BE SECURED IN THE MOUTH
PARTIE FEMELLE DESTINÉE À FORMER UNE LIAISON AMOVIBLE AVEC UNE PARTIE MÂLE POUVANT ÊTRE FIXÉE DANS LA BOUCHE

(30) Priorität: 19.09.2014 CH 14132014
(43) Veröffentlichungstag der Anmeldung: 23.03.2016
(73) Patentinhaber: Cendres + Métaux SA, 2504 Biel/Bienne (CH)
(72) Erfinder: Fäh, Mathias, 4500 Solothurn (CH); Strazza, Mathias, 2554 Meinisberg (CH); Walther, Matthias, 4142 Münchenstein (CH)
(74) Vertreter: AMMANN PATENTANWÄLTE AG

(56) Entgegenhaltungen:
- EP-A1- 2 664 297
- EP-A1- 2 666 437

## Beschreibung

Die vorliegende Erfindung bezieht sich auf ein Matrizenteil zur Bildung einer lösbaren Verbindung mit einem im Mund befestigbaren Patrizenteil, umfassend ein an einem Zahnersatz befestigbaren Gehäuse und einen in das Gehäuse einfügbaren Einsatz.

Derartige Matrizenteile werden in der Dentalprothetik verwendet, um eine abnehmbare Zahnprothese oder einen andersartigen Zahnersatz in lösbarer Weise im Mund anbringen zu können. Mit Zunahme der Benutzungsdauer kann die Haltekraft, mit welcher das Matrizenteil am Patrizenteil gehalten ist z.B. aufgrund von Verschleiss nachlassen.

Die ursprüngliche Haltekraft ist bei einfacheren Ausführungsformen der Matrizenteile, wie sie z.B. aus der EP 867 154 A1 der gleichen Anmelderin oder der WO 2011/027229 A2 bekannt sind, wiederherstellbar, indem der Einsatz ausgewechselt wird. Das hat den Nachteil, dass zusätzliche Ersatzteile vorzusehen sind und die Einstellung der Haltekraft einen Wechsel dieser Teile erfordert.

Ein Matrizenteil mit einem Gehäuse und einem Einsatz ist auch aus der EP 2 664 297 A1 der gleichen Anmelderin bekannt. Das Matrizenteil weist diskret angeordnete Einrastpositionen zwischen dem Gehäuse und den Einsatz auf. Ist der Einsatz in das Gehäuse eingesetzt, so kann dieser nicht in Bezug auf das Gehäuse gedreht werden. Auch hier ist der Einsatz auszuwechseln, wenn die Haltekraft geändert werden soll.

Es sind auch aktivierbare Matrizenteile bekannt, welche es ermöglichen, die Haltekraft zu verstellen. So ist z.B. aus der EP 0 894 480 A1 der gleichen Anmelderin ein Matrizenteil mit einem verdrehbaren Einstellring bekannt, welcher auf den Einsatz wirkt. In der EP 1 021 999 A1 der gleichen Anmelderin ist ein Matrizenteil mit einem Lamelleneinsatz beschrieben. Diese Art von Matrizenteilen ist für eine stufenlose Verstellbarkeit ausgelegt, was es schwierig macht, eine spezifisch gewünschte, definierte Kraftstufe einzustellen.

Es ist eine Aufgabe der vorliegenden Erfindung, ein Matrizenteil anzugeben, welches ein definiertes, einfaches Verstellen der Haltekraft ermöglicht, mit welcher es am Patrizenteil gehalten wird.

Diese Aufgabe wird durch das Matrizenteil gemäss Anspruch 1 gelöst. Die weiteren Ansprüche geben bevorzugte Ausführungen des erfindungsgemässen Matrizenteils sowie einen Verbindungssatz mit einem derartigen Matrizenteil an.

Gemäss Anspruch 1 sind Verstellmittel, welche beim Drehen des Einsatzes in Bezug auf das Gehäuse ein Verändern des Einsatzes im Durchmesser bewirken, und Rastmittel vorgesehen, welche zur Vorgabe von diskret angeordneten Einrastpositionen zwischen dem Gehäuse und dem Einsatz ausgebildet sind, wobei bei mindestens einer Einrastposition der Einsatz mehr zusammengedrückt ist als bei mindestens einer anderen Einrastposition. Durch eine entsprechende Formgebung der inneren Seite des Gehäuses sowie der äusseren Seite des Einsatzes ist eine einfache Möglichkeit geschaffen, die Haltekraft durch Drehen des Einsatzes in Bezug auf das Gehäuse zu verstellen.

Vorzugsweise sind die Verstellmittel so ausgestaltet, dass sich der Einsatz beim Drehen um die Drehachse eine unveränderte axiale Lage aufweist. Dies wird z.B. durch Vorsehen mindestens einer Hinterschneidung erzielt und/oder indem die Verstellmittel gewindelos ausgestaltet sind.

Weitere Merkmale und deren Vorteile gehen aus den weiteren Ansprüchen sowie aus nachfolgender Beschreibung hervor.

Die Erfindung wird im Folgenden anhand von Ausführungsbeispielen unter Bezugnahme auf Figuren erläutert. Es zeigen
Fig. 1 eine Explosionsansicht eines beispielhaften Patrizenteils zusammen mit einem erfindungsgemässen Matrizenteil aus Gehäuse und Einsatz gemäss einem ersten Ausführungsbeispiel;
Fig. 2 den Einsatz gemäss Fig. 1 in einer Seitenansicht;
Fig. 3 den Einsatz gemäss Fig. 1 in einem Längsschnitt, wobei die Schnittebene so gelegt ist wie durch die Linie III-III in Fig. 4 angegeben;
Fig. 4 den Einsatz gemäss Fig. 1 in einem Querschnitt, wobei die Schnittebene so gelegt ist wie durch die Linie IV-IV in Fig. 4 angegeben;
Fig. 5 das Gehäuse gemäss Fig. 1 in einer Unteransicht;
Fig. 6 das Gehäuse gemäss Fig. 1 in einer Seitenansicht;
Fig. 7 das Gehäuse gemäss Fig. 5 im Schnitt gemäss der dort angegebenen Linie VII-VII;
Fig. 8 das Gehäuse gemäss Fig. 6 im Schnitt gemäss der dort angegebenen Linie VIII-VIII;
Fig. 9 eine geschnittene Ansicht des Gehäuses und des Einsatzes gemäss Fig. 1 im zusammengesetzten Zustand, wobei die Schnittebene so gelegt ist wie durch die Linie IX-IX in Figuren 3 und 6 angegeben;
Fig. 10 eine geschnittene Ansicht des Gehäuses und des darin eingesetzten, sich in der ersten Einrastposition befindenden Einsatzes gemäss Fig. 1, wobei die Schnittebene so gelegt ist wie durch die Linie VIII-VIII in Fig. 6 angegeben;
Fig. 11 eine Schnittansicht gemäss Fig. 10, wobei sich jedoch der Einsatz in der zweiten Einrastposition befindet,
Fig. 12 eine Schnittansicht gemäss Fig. 10, wobei sich jedoch der Einsatz in der dritten Einrastposition befindet,
Fig. 13 eine perspektivische Ansicht des Patrizenteils aus Fig. 1;
Fig. 14 das Patrizenteil aus Fig. 1 in einer Draufsicht geschnitten auf dem Niveau der Nut 52;
Fig. 15 das Patrizenteil aus Fig. 1 in einem Längsschnitt;
Fig. 16 die miteinander verbundenen Teile aus Fig. 1 in einem Längsschnitt, wobei das Patrizenteil nur teilweise gezeigt ist,
Fig. 17 eine Explosionsansicht eines beispielhaften Patrizenteils zusammen mit einem erfindungsgemässen Matrizenteil aus Gehäuse und Einsatz gemäss einem zweiten Ausführungsbeispiel;
Fig. 18 den Einsatz gemäss Fig. 17 in einer Seitenansicht;
Fig. 19 den Einsatz gemäss Fig. 17 in einem Längsschnitt, wobei die Schnittebene so gelegt ist wie durch die Linie XIX-XIX in Fig. 20 angegeben;
Fig. 20 den Einsatz gemäss Fig. 17 in einem Querschnitt, wobei die Schnittebene so gelegt ist wie durch die Linie XX-XX in Fig. 19 angegeben;
Fig. 21 den Einsatz gemäss Fig. 17 in einer Draufsicht;
Fig. 22 das Gehäuse gemäss Fig. 17 in einer Unteransicht;
Fig. 23 das Gehäuse gemäss Fig. 22 geschnitten auf dem Niveau des Gehäusebodens;
Fig. 24 eine geschnittene Ansicht des Gehäuses und des darin eingesetzten, sich in der ersten Einrastposition befindenden Einsatzes gemäss Fig. 17;
Fig. 25 eine Schnittansicht gemäss Fig. 24, wobei sich jedoch der Einsatz in der zweiten Einrastposition befindet,
Fig. 26 eine Schnittansicht gemäss Fig. 24, wobei sich jedoch der Einsatz in der dritten Einrastposition befindet,
Fig. 27 das Gehäuse gemäss Fig. 22 in einer geschnittenen Seitenansicht; und
Fig. 28 die miteinander verbundenen Teile aus Fig. 17 in einem Längsschnitt.

### 1. Ausführungsbeispiel

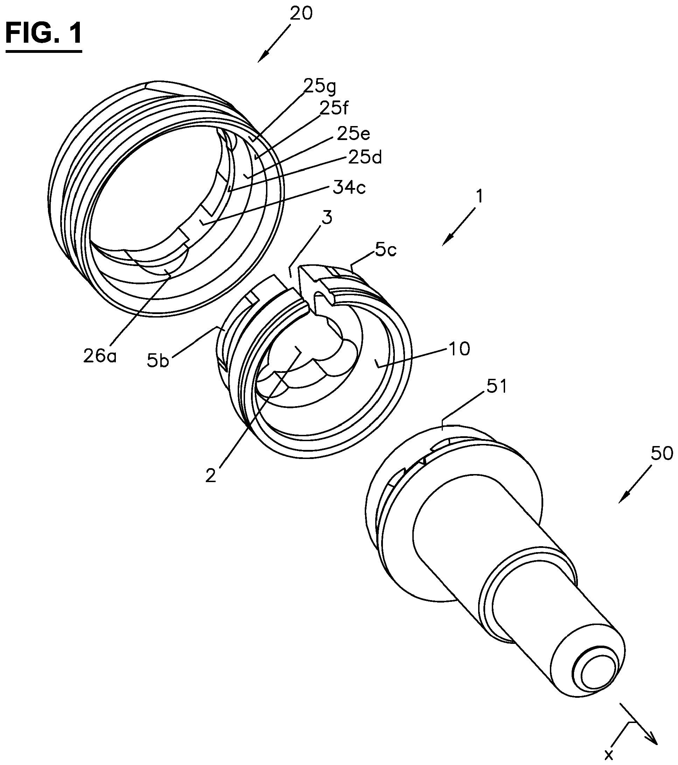

Fig. 1 zeigt zur lösbaren Befestigung eines Zahnersatzes im Mund einen Verbindungssatz, der ein Patrizenteil 50 sowie ein Matrizenteil mit einem Gehäuse 20 und einem Einsatz 1 aufweist. Die einzelnen Komponenten 1, 20, 50 sind in der Fig. 1 in der Axialrichtung x versetzt angeordnet dargestellt, in welche sie zum Zusammenfügen und Auseinandernehmen verschoben werden. Die Axialrichtung x ist durch die Längsachse der Komponenten 1, 20, 50 definiert und entspricht der Drehachse, um welche - wie weiter unten erläutert - der Einsatz 1 in Bezug auf das Gehäuse 20 drehbar ist. In der nachfolgenden Beschreibung werden Axialrichtung, Längsachse und x-Achse als Synonyme verwendet.

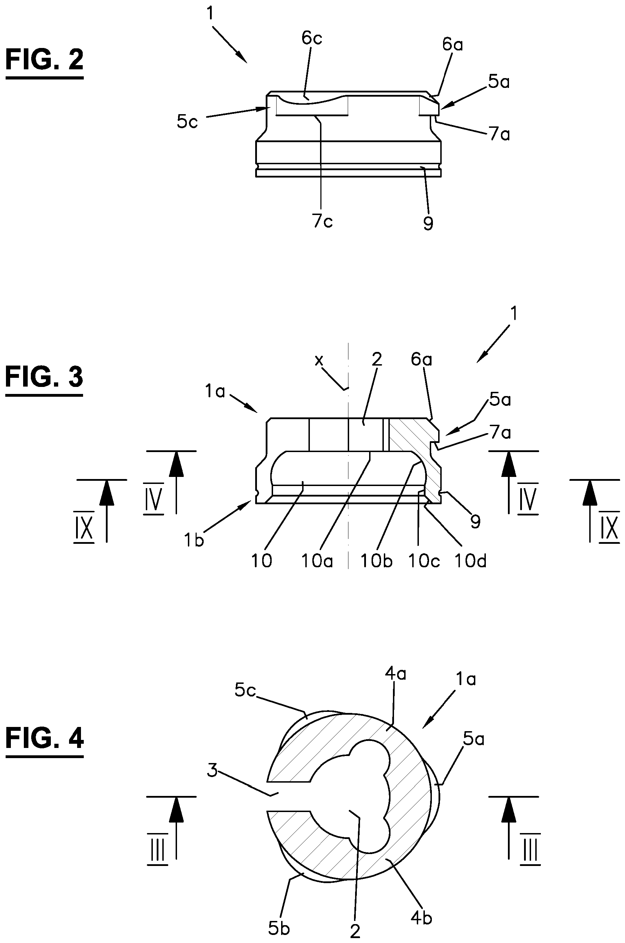

Der Einsatz 1, welcher in den Figuren 2 bis 4 einzeln dargestellt ist, weist ein Deckelelement 1a auf, von welcher ein um die x-Achse verlaufendes Wandelement 1b absteht. Er ist mit einer Durchgangsöffnung 2 versehen, die in Richtung der x-Achse durch das Deckelement 1a hindurch verläuft. Weiter weist der Einsatz 1 seitlich einen Schlitz 3 auf, der durch die beiden Elemente 1a, 1b hindurchgeht und in der Durchgangsöffnung 2 mündet. Der Einsatz 1 ist somit im Wesentlichen als C-förmiges Ringelement ausgebildet.

Das Deckelelement 1a umfasst Schwächungsstellen 4a, 4b, bei welchen die Wandstärke reduziert ist. Entsprechend ist die Durchgangsöffnung 2 so geformt, dass sie an diesen Stellen 4a, 4b in radialer Richtung gesehen weiter nach aussen reicht als im restlichen Teil. Durch das Vorsehen der Schwächungsstellen 4a, 4b ist ein gleichmässigeres Zusammendrücken bzw. Aufdehnen des Einsatzes 1 in radialer Richtung gewährleistet, wenn z.B. - wie weiter unten erläutert - der Einsatz 1 aktiviert wird oder auf dem Patrizenteil 50 befestigt wird.

Das Deckelelement 1a ist aussenseitig mit Vorsprüngen 5a, 5b, 5c versehen, die in radialer Richtung hervorspringen und um den Umfang des Einsatzes 1 herum verteilt angeordnet sind.

Der jeweilige Vorsprung 5a, 5b, 5c weist eine abgeschrägte Oberseite 6a, 6c auf, was das Einfügen des Einsatzes 1 in das Gehäuse 20 erleichtert, und ist in der Umfangsrichtung gesehen rund geformt, was ein Weiterdrehen des Einsatzes 1 im Gehäuse 20 erleichtert.

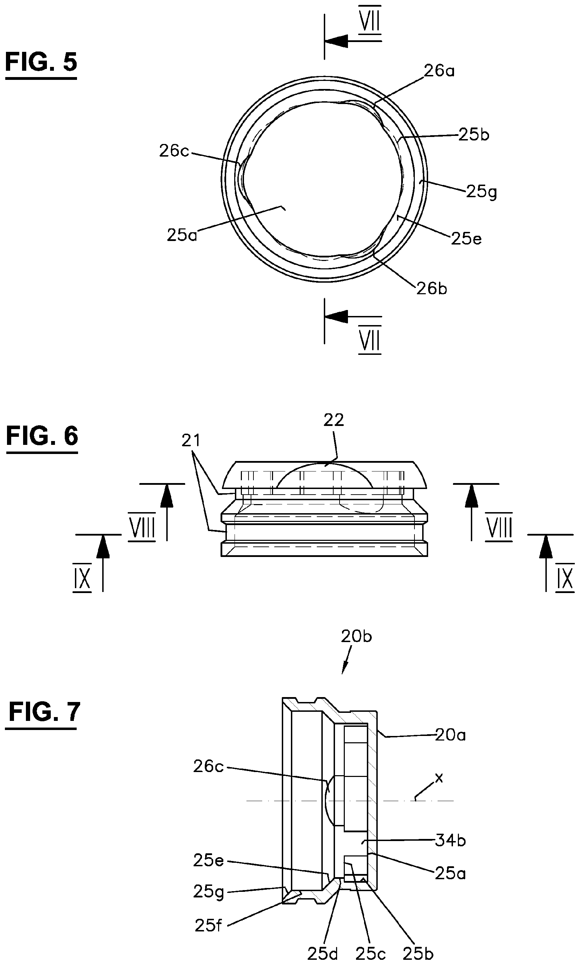

Die Unterseite 7a, 7c eines jeweiligen Vorsprungs 5a, 5b, 5c dient als Anschlagsfläche, welche bei einem Auseinanderziehen von Gehäuse 20 und dem darin eingesetzten Einsatz 1 an einer Innenfläche des Gehäuses 20 anschlägt (vgl. Innenfläche 25c in Fig. 7). Der jeweilige Vorsprung 5a, 5b, 5c definiert demnach eine hinterschnittene Form im Einsatz 1, um eine Retention im Gehäuse 20 zu bewirken.

Beim vorliegenden Ausführungsbeispiel sind drei Vorsprünge 5a-5c vorgesehen, die in Umfangsrichtung gleichmässig verteilt angeordnet sind. Hier ist zwischen zwei Vorsprüngen 5a, 5b, 5c eine Schwächungsstelle 4a, 4b bzw. der Schlitz 3 angeordnet (vgl. Fig. 4). Die Elemente 3, 4a, 4b können jedoch auch eine andere radiale Position in Bezug auf die Vorsprünge 5a, 5b, 5c haben. Die Anzahl der Vorsprünge 5a, 5b, 5c und Schwächungsstellen 4a, 4b ist je nach Anwendungszweck auslegbar und kann eins, zwei oder mehr betragen. In einer einfacheren Ausführungsform können die Schwächungsstellen 4a, 4b auch weggelassen sein. Auch kann der Schlitz 3 weggelassen sein, so dass das Wandelement 1b einen geschlossenen Ring bildet, oder es können ein oder mehrere Einschnitte im Wandelement 1b vorgesehen sein zur Bildung von Lamellen (vgl. Einschnitt 3a-3c beim zweiten Ausführungsbeispiel).

Das Wandelement 1b ist aussenseitig mit einer Nut 9 versehen. Diese dient zum Eingriff für ein Hilfsinstrument zur Handhabung des Einsatzes 1.

Die Innenseite des Einsatzes 1 definiert eine Aufnahme 10 für einen Teil des Patrizenteils 50, hier den Kopf 51 und ist entsprechend an dessen Form angepasst. Die Innenseite des Deckelelements 1a ist im vorliegenden Ausführungsbeispiel durch eine ebene Innenfläche 10a gegeben, welche in eine konkav gekrümmte, runde Innenfläche 10b des Wandelements 1b übergeht. Der Innenfläche 10b schliesst sich eine im Wesentlichen kreiszylindrische Innenfläche 10c an, welche an eine geneigte Abschlussfläche 10d angrenzt. Durch diese Neigung weist die Aufnahme 10 einen sich nach innen verjüngenden Eingang auf, was das Einfügen des Patrizenteils 50 erleichtert. Natürlich ist die Innenseite des Einsatzes 1 anders als hier gezeigt auslegbar je nach Ausgestaltung des Patrizenteils, dessen Kopf z.B. kugelförmig, konisch oder anders geformt sein kann.

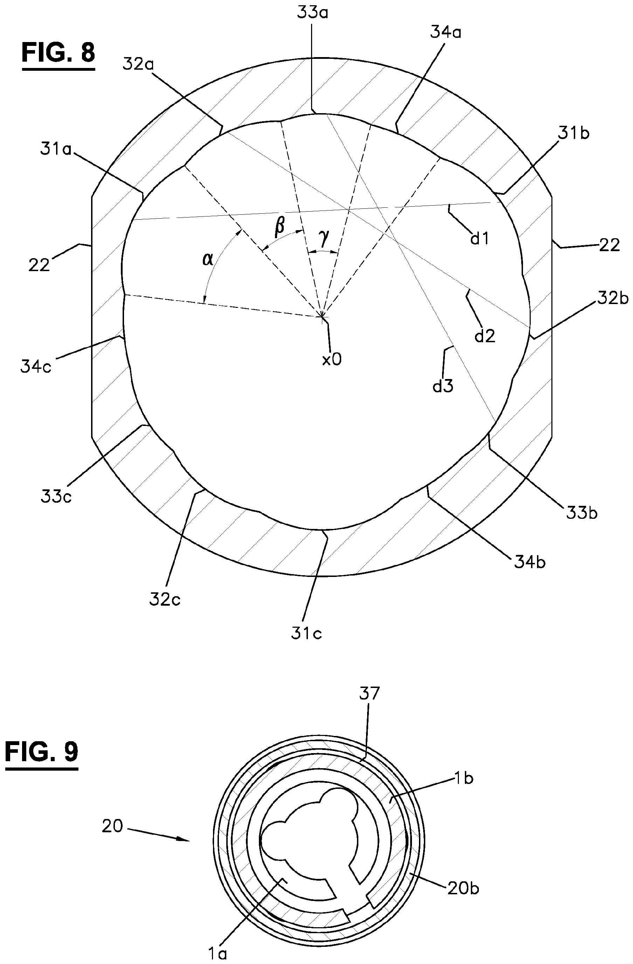

Das Gehäuse 20, welches am Zahnersatz, z. B. einer Zahnprothese, befestigbar ist, beispielsweise durch Einpolymerisieren, ist in den Figuren 5 bis 7 genauer ersichtlich. Das Gehäuse 20 ist topfförmig ausgebildet und umfasst ein Bodenelement 20a, welches hier eine flache Oberseite aufweist und von welchem eine umlaufende Seitenwand 20b absteht. Die Aussenseite des Gehäuses 20 weist eine hinterschnittene Form auf durch Vorsehen von einer oder mehreren Retentionsrillen 21, welche um die x-Achse verlaufen. Dadurch ist eine sichere Verbindung zwischen Gehäuse 20 und Zahnersatz gewährbar. Weiter ist die Aussenseite des Gehäuses 20 an zwei gegenüberliegenden Stellen 22 abgeflacht ausgebildet (vgl. Fig. 8). Durch das Vorsehen der flachen Seiten 22 ist ein rotationssicherer Halt des Gehäuses 20 gewährleistet, wenn dieses z. B. im Kunststoff einer Zahnprothese eingebracht ist. Je nach Anwendungszweck ist die Aussenseite des Gehäuses 20 auch anders gestaltbar.

Das Innere des Gehäuses 20 definiert eine Aufnahme für den Einsatz 1. Die Innenseite des Bodenelements 20a ist durch einen ebenen Boden 25a gegeben. Die Innenseite der Seitenwand 20b umfasst umlaufende Innenflächen 25b-25g, welche sich in Richtung zur Öffnung des Gehäuses 20 hin wie folgt aufeinanderfolgen:
- eine erste Innenfläche 25b, welche zur Kontaktierung der Vorsprünge 5a-5c am Einsatz 1 ausgelegt ist,
- eine zweite Innenfläche 25c, welche quer zur ersten Innenfläche 25b angeordnet ist und einen Hinterschnitt bildet, so dass die Vorsprünge 5a-5c bei einem Ziehen des Einsatzes 1 in Richtung der x-Achse an der Innenfläche 25c anschlagen,
- eine dritte Innenfläche 25d, welche zusammen mit der zweiten Innenfläche 25c den Hinterschnitt bildet und somit zumindest teilweise in radialer Richtung gesehen näher zur x-Achse angeordnet ist als die erste Innenfläche 25b (vgl. auch Fig. 5, in welcher die Innenfläche 25b verdeckt ist und daher durch eine gestrichelte Linie dargestellt ist),
- eine vierte Innenfläche 25e, welche sich aufweitend verläuft, um einen Übergang zu einem vergrösserten Innendurchmesser zu bilden,
- eine fünfte Innenfläche 25f, welche im Wesentlichen kreiszylindrisch ausgebildet ist, und
- eine sechste Innenfläche 25g, welche nach innen geneigt abgeschrägt ist und den Abschluss der Eingangsöffnung des Einsatzes 1 bildet.

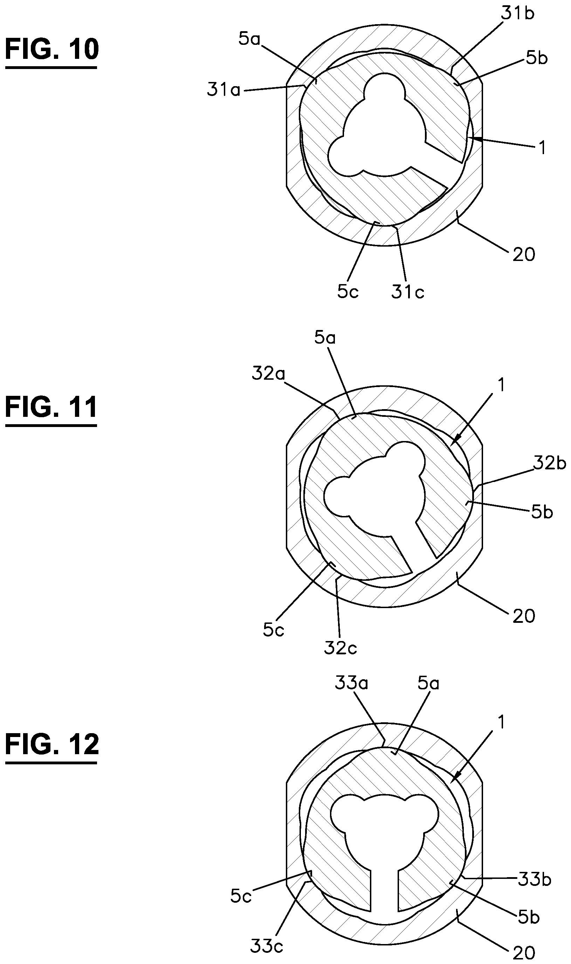

Die vierte Innenfläche 25e weist abgeschrägte Stellen 26a-26c auf, die stärker geneigt sind als der Rest der Innenfläche 25e. Die Stellen 26a-26c definieren Einführpositionen für die Vorsprünge 5a-5c und sind demnach um die x-Achse so verteilt angeordnet wie die Vorsprünge 5a-5c (vgl. Figuren 4 und 5). Die Position der Stellen 26a-26c ist hier so gewählt, dass sich nach Einfügen des Einsatzes 1 in das Gehäuse 20 die erste Einrastposition ergibt (vgl. Fig. 10).

Die zweite Innenfläche 25c, welche den Absatz des Hinterschnittes bildet, erstreckt sich im vorliegenden Beispiel nicht kontinuierlich in Umfangsrichtung, sondern ist an Stellen 34a-34c, welche benachbart zu den abgeschrägten Stellen 26a-26c sind, unterbrochen. Diese Stellen 34a-34c bilden einen Übergang, wo sich die dritte Innenfläche 25d bis zum Boden 25a erstreckt (vgl. Figuren 1, 7 und 8).

Die erste Innenfläche 25b ist so geformt, dass sie Einrastpositionen des Einsatzes 1 im Gehäuse 20 definieren. Generell weist die Innenfläche 25b geschnitten quer zur x-Achse eine Form auf, die von einer kreisrunden Form abweicht. Dies ist z.B. dadurch erzielbar, indem mindestens eine Einbuchtung vorgesehen ist, welche eine Krümmung mit einem Krümmungsmittelpunkt aufweist, der radial versetzt zur Drehachse x angeordnet ist. Fig. 8, welche eine vergrösserte Darstellung des Gehäuses 20 im Querschnitt ist, zeigt eine beispielhafte Ausführungsform. Es sind eine Anzahl Einbuchtungen 31a-31c, 32a-32c, 33a-33c vorgesehen, die so ausgelegt sind, dass je nach der Winkelstellung des Einsatzes 1 in Bezug auf das Gehäuse 20, das Mass verschieden ist, um welches der Einsatz 1 in radialer Richtung zusammengedrückt ist.

Im vorliegenden Beispiel ist das Gehäuse 20 für die Aufnahme eines Einsatzes 1 mit drei Vorsprüngen ausgelegt. Die Innenfläche 25b des Gehäuses 20 hat im Querschnitt gesehen eine dreifache Rotationsymmetrie, d.h. die Form der Innenfläche 25b wiederholt sich nach jeweils 120 Grad. Im Weiteren sind im vorliegenden Beispiel drei Einrastpositionen vorgesehen. Demnach umfasst die Innenfläche 25b über einen Bogenabschnitt von 120 Grad gesehen jeweils eine Einbuchtung einer ersten Art 31a-31c, einer zweiten Art 32a-32c und einer dritten Art 33a-33c. An die jeweilige Einbuchtung der dritten Art 33a-33c grenzt eine der Stellen 34a, 34b, 34c an, welche den Übergang zum nächsten 120-Grad-Bogenabschnitt bildet.

Die Einbuchtungen der jeweiligen Art 31a-31c, 32a-32c, 33a-33c sind unterschiedlich ausgelegt. Hier ist die Krümmung der jeweiligen Einbuchtung 31a-31c, 32a-32c, 33a-33c gleich gewählt, jedoch variiert der maximale Abstand vom Zentrum x0. Entsprechend sind der Winkelbereich, über welchen sich eine Einbuchtung der ersten, 31a-31c, zweiten ,32a-32c, bzw. dritten Art 33a-33c erstreckt, und der Abstand zwischen den Mittelpunkten der Einbuchtungen der gleichen Art 31a-31c, 32a-32c, 33a-33c verschieden. In Fig. 8 sind beispielhaft der Winkel α, β, γ, um welchen sich die Einbuchtung 31a, 32a bzw. 33a erstreckt, eingezeichnet sowie der Abstand d1, d2, d3 zwischen den Mittelpunkten der Einbuchtungen 31a und 31b, 32a und 32b bzw. 33a und 33b. Hier sind α > β > γ und d1 > d2 > d3.

Die Einbuchtungen 31a-31c, 32a-32c, 33a-33c sind hier als Abschnitte einer im Wesentlichen kreiszylindrischen Fläche ausgebildet; sie können jedoch auch anders geformt sein, vorzugsweise mit einer runden Form.

Einsatz 1 und Gehäuse 20 sind zusammenfügbar, indem die Teile relativ zueinander so ausgerichtet werden, dass die Vorsprünge 5a-5c über die abgeschrägten Stellen 26a-26c eingeführt werden können und in den Einbuchtungen der ersten Art 31a-31c zu liegen kommen. Der Einsatz 1 befindet sich dann in der ersten Einrastposition (vgl. Fig. 10). Diese ist hier so ausgelegt, dass der Einsatz 1 im Wesentlichen dieselbe Form annimmt, wie im vom Gehäuse 1 getrennten Zustand, und somit das Gehäuse 1 praktisch keine zusätzliche radiale Kraft auf den Einsatz 1 ausübt. Bei Bedarf, z.B. wenn die Haltekraft, mit welcher das Matrizenteil 1, 20 am Patrizenteil 50 gehalten wird, nachlässt, wird der Einsatz 1 in die nächste Einrastposition gebracht, indem ein genügend grosses Drehmoment auf den Einsatz 1 aufgebracht wird, so dass die Vorsprünge 5a-5c aus den Einbuchtungen der ersten Art 31a-31c herausbewegt werden und in den Einbuchtungen der zweiten Art 32a-32c zu liegen kommen (vgl. Fig. 11). Die zweite Einrastposition ist so ausgelegt, dass eine Aktivierung erzielt wird, indem das Gehäuse 1 eine radiale Kraft auf den Einsatz 1 ausübt und diesen so zusammendrückt. Die in Fig. 12 gezeigte dritte Einrastposition, welche eingestellt wird, indem der Einsatz 1 nochmals um die x-Achse gedreht wird, weist hier eine noch stärkere Aktivierung auf, d.h. der Einsatz 1 ist hier am stärksten zusammengedrückt. Wird der Einsatz 1 um die x-Achse noch mehr gedreht, so gelangt er von der dritten Einrastposition über die Stellen 34a-34c wieder zur ersten Einrastposition.

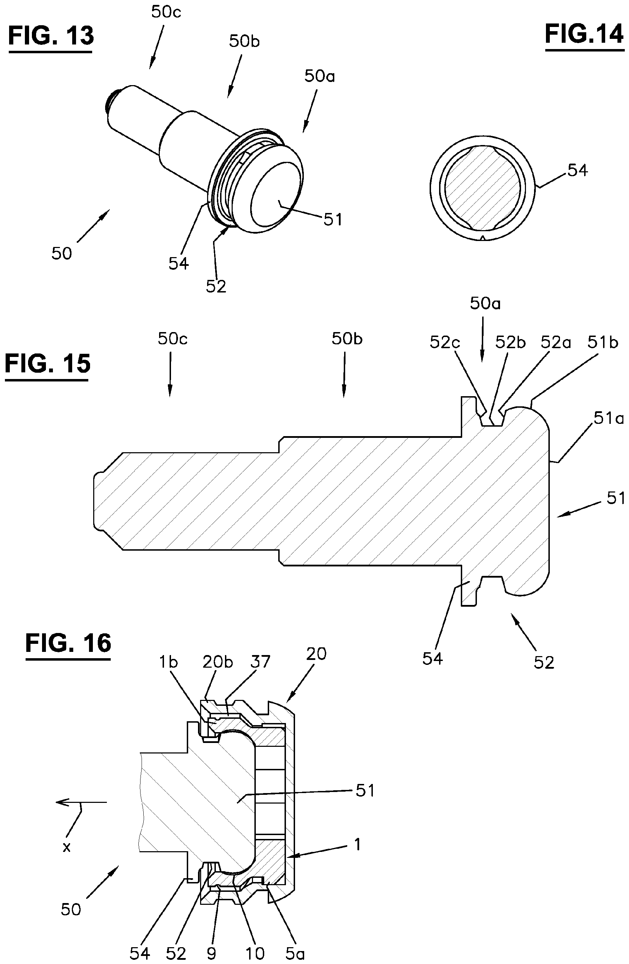

Das Wandelement 1b des Einsatzes 1 verläuft im Bereich der Eingangsöffnung beabstandet zur Seitenwand 20b des Gehäuses 20, sodass sich ein Freiraum 37 dazwischen ergibt, vgl. Figuren 9 und 16. Der Rand des Einsatzes 1 ist somit von aussen zugänglich, so dass er bei Bedarf zusammengedrückt, z.B. mittels einer an der Nut 9 angreifenden Hilfsinstruments, und wieder aus dem Gehäuse 20 entnommen werden kann.

Das Matrizenteil 1, 20 ist z.B. bei einem Patrizenteil 50 als Gegenstück verwendbar, wie es in den Figuren 13 bis 15 gezeigt ist. Das Patrizenteil ist hier als Abutment ausgebildet, das ein Verbindungsende 50a aufweist, welches via einen Patrizenmittelteil 50b mit einem Befestigungsende 50c verbunden ist. Patrizenmittelteil 50b und Befestigungsende 50c sind so ausgebildet, dass das Abutment 50 an einem Implantat befestigbar ist. Zu diesem Zweck weist das Befestigungsende 50c z.B. ein Gewinde auf, welches in ein komplementäres Gewinde am Implantat einschraubbar ist.

Je nach Anwendung sind die Teile 50b und 50c auch so auslegbar, dass das Patrizenteil 50 an einer anderen Dentalkomponente (Wurzelstift, Wurzelanker, Steg, insbesondere einem mittels CAD/CAM hergestellten Steg, beispielsweise in Form eines Patrizenkopfes mit Gewinde, mittels welchem der Kopf bündig auf den Steg schraubbar ist, Wurzelkappe, etc.) oder direkt in einem Knochen oder einer Zahnwurzel anbringbar ist.

Wie insbesondere Fig. 15 zeigt, weist das Verbindungsende 50a des Patrizenteils 50 stirnseitig einen Kopf 51 mit einer Kontur auf, die konvex und/oder eben geformt ist. Im vorliegenden Beispiel weist die Kontur eine ebene Stirnseite 51a auf, die seitlich an eine umlaufende, runde Fläche 51b angrenzt, die hier einen kreisrunden Querschnitt aufweist. Vorzugsweise ist der Kopf 51 frei von Kanten, die einen Benutzer bei einer Anwendung im Mund stören können, und/oder frei von konkaven Flächen, insbesondere Vertiefungen, die u.a. eine Reinigung erschweren. Die Fläche 51b grenzt an eine Nut 52, die zwei Seitenflächen 52a und 52c aufweist, zwischen welchen eine Bodenfläche 52b angeordnet ist. Die Seitenflächen 52a und 52c sind im Querschnitt gesehen zueinander gerichtet angeordnet, so dass sich die Nut 52 in Richtung zur Bodenfläche 52b hin verjüngt. Wie bereits oben erwähnt, kann der Kopf des Patrizenteils auch anders gestaltet sein, kugelförmig, konisch, etc.

An die Nut 52 grenzt ein umlaufender Kragen 54 an, welcher im vorliegenden Beispiel tellerförmig ausgestaltet ist. Dieser steht, wie in Fig. 15 ersichtlich, seitlich ab und hat hier einen grösseren Durchmesser als der Kopf 51. Der Kragen 54 grenzt an den Patrizenmittelteil 50b.

Das aus Einsatz 1 und Gehäuse 20 zusammengesetzte Matrizenteil ist durch Verschieben in Richtung der x-Achse auf das Patrizenteil 1 aufsetzbar. Fig. 16 zeigt die Teile 1, 20, 50 im zusammengefügten Zustand. Der Kopf 51 des Patrizenteils 50 ist in der Aufnahme 10 des Einsatzes 1 aufgenommen und liegt zumindest teilweise an der inneren Seite des Einsatzes 1 an. Der Einsatz 1 umschliesst somit einen Teil des Patrizenteils 1, hier den Kopf 51. Kragen 54 und Rand des Gehäuses 20 sind so angeordnet, dass sich der Kragen 54 ausserhalb vom Gehäuse 20 befindet.

Das jeweilige Teil 1, 20, 50 ist aus einem mundbeständigen Material wie Metall, z.B. Titan, oder Kunststoff, z.B. PEAK (Polyaryletherketon), insbesondere PEEK (Polyetheretherketon) oder PEKK (Polyetherketonketon) fertigbar. In einer besonderen Ausführungsform ist der Einsatz 20 aus einer Gold enthaltenden Legierung gefertigt, wobei vorzugsweise der Goldgehalt mehr als 50 Gewichtsprozent beträgt.

### 2. Ausführungsbeispiel

Beim ersten Ausführungsbeispiel dienen die Vorsprünge 5a-5c sowie die Einbuchtungen 31a-31c, 32a-32c, 33a-33c gleichzeitig als Verstellmittel, welche beim Drehen des Einsatzes 1 in Bezug auf das Gehäuse 20 ein Verändern des Einsatzes 1 im Durchmesser bewirken, sowie als Rastmittel, mittels welcher diskret angeordnete Einrastpositionen vorgebbar sind.

Es ist auch denkbar, die Verstellmittel und die Rastmittel getrennt voneinander auszubilden wie dies bei der nachfolgend beschriebenen Ausführungsform der Fall ist.

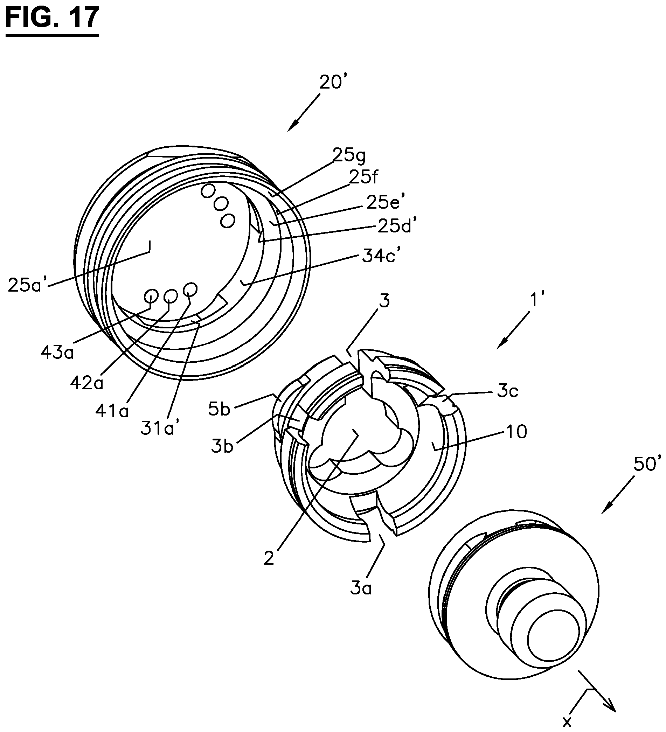

Fig. 17 zeigt ein zweites Ausführungsbeispiel eines Verbindungssatzes, der ein Patrizenteil 50' sowie ein Matrizenteil mit einem Gehäuse 20' und einem Einsatz 1' aufweist. Elemente, die gleich wie beim ersten Ausführungsbeispiel sind, sind mit den gleichen Bezugszeichen versehen.

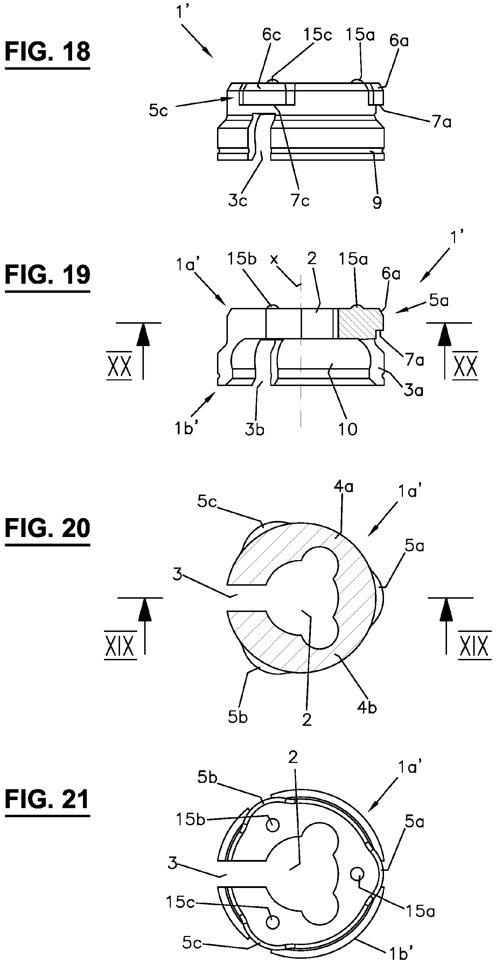

Der Einsatz 1', welcher in den Figuren 18 bis 21 einzeln dargestellt ist, weist ein Deckelelement 1a' auf, von welchem ein um die x-Achse verlaufendes Wandelement 1b' absteht. Nebst dem Schlitz 3, der durch die beiden Elemente 1a', 1b' hindurchgeht, ist das Wandelement 1b' mit Einschnitten 3a, 3b, 3c versehen, so dass es Lamellen aufweist (vgl. Fig. 17).

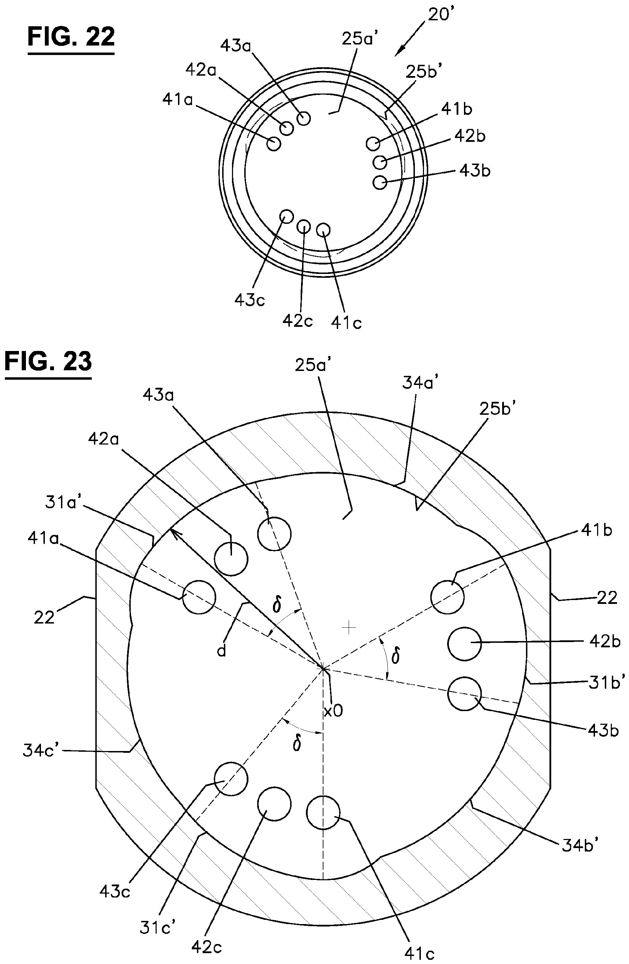

Zur Bildung von Rastmitteln sind aussen auf dem Deckelelement 1a' Noppen 15a, 15b, 15c angeordnet, die aus der Grundfläche hervorspringen und in Dellen 41a-41c, 42a-42c, 43a-43c einrastbar sind, welche im Boden 25a' des Gehäuses 20' geformt sind, vgl. Figuren 22 und 23.

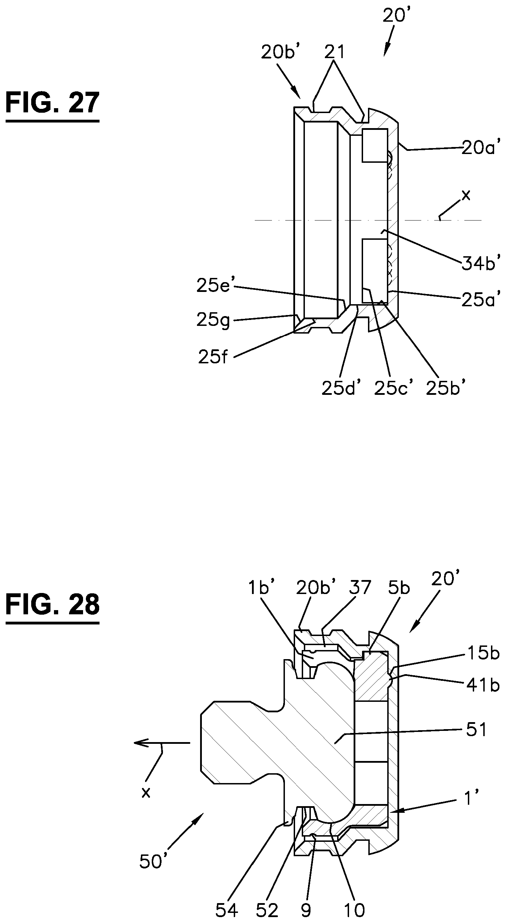

Wie Figuren 17 und 27 zeigen, umfasst das Gehäuse 20' ein Bodenelement 20a' mit einer Seitenwand 20b', welche umlaufende Innenflächen 25b'-25d', 25g, 25f aufweist, die sich in Richtung zur Öffnung des Gehäuses 20' hin gesehen wie folgt aufeinanderfolgen:
- eine erste Innenfläche 25b' zur Kontaktierung der Vorsprünge 5a-5c am Einsatz 1',
- eine zweite, quer zur Fläche 25b' angeordnete Innenfläche 25c',
- eine dritte Innenfläche 25d',
- eine vierte Innenfläche 25e', welche sich aufweitend verläuft, um einen Übergang zu den beiden weiteren Innenflächen 25f und 25g zu bilden, welche gleich sind wie beim Einsatz 1 gemäss dem ersten Ausführungsbeispiel.

Die zweite Innenfläche 25c', die zusammen mit der dritten Innenfläche 25d' einen Hinterschnitt bildet, ist an Stellen 34a'-34c'unterbrochen, die einen Übergang bilden, wo sich die dritte Innenfläche 25d' bis zum Boden 25a' erstreckt.

Die erste Innenfläche 25b' ist so geformt, dass sie zusammen mit den Vorsprüngen 5a-5c am Einsatz 1' Verstellmittel bilden, welche es erlauben, den Einsatz 1' im Durchmesser zu verändern. Generell weist die Innenfläche 25b' geschnitten quer zur x-Achse eine Form auf, die von einer kreisrunden Form abweicht. Fig. 23 ist eine vergrösserte Darstellung des Gehäuses 20' im Querschnitt. Die Innenfläche 25b' weist Einbuchtungen 31a'-31c' auf, welche einen Bogenabschnitt aufweisen, der sich über einen Winkel δ erstreckt. Im vorliegenden Beispiel ist das Gehäuse 20' für die Aufnahme eines Einsatzes 1' mit drei Vorsprüngen 5a-5c ausgelegt, so dass drei gleiche Bogenabschnitte δ vorgesehen sind, die um jeweils 120 Grad radial versetzt angeordnet sind. Im Weiteren ist hier ein Bogenabschnitt δ rund ausgebildet, wobei der Abstand d im Uhrzeigersinn gesehen abnimmt. Ausserhalb der Bogenabschnitte δ weist die Innenfläche 25b' weitere gekrümmte Bogenabschnitte auf, welche vorzugsweise so ausgelegt sind, dass der jeweilige Vorsprung 5a, 5b, 5c des Einsatzes 1' entlang der ganzen Innenfläche 25b' gedreht werden kann.

Im Weiteren sind beim vorliegenden Ausführungsbeispiel drei Einrastpositionen vorgesehen, wobei der Einsatz 1' drei Noppen aufweist. Der Gehäuseboden 25a' weist demnach Tripel an Dellen auf, welche um jeweils 120 Grad radial versetzt angeordnet sind. Gemäss Fig. 23 ist jeweils ein Tripel durch die Dellen 41a, 42a, 43a, die Dellen 41b, 42b, 43b sowie die Dellen 41c, 42c, 43c gebildet. Je nach Anwendungszweck ist die Anzahl und Anordnung der Noppen und Dellen auch anders wählbar. In einer einfacheren Ausführungsform sind z.B. eine Noppe und zwei Dellen vorgesehen zur Vorgabe von zwei Einrastpositionen. Es ist auch eine komplementäre Ausgestaltung möglich ist, bei welcher der Einsatz zwei oder mehr Dellen und das Gehäuse eine oder mehre Noppen aufweisen.

Die Anordnung der Dellen 41a-43c ist so gewählt, dass sich eine Rasterung ergibt, bei welcher sich je nach Drehposition des Einsatzes 1' in Bezug auf das Gehäuse 20' die Vorsprünge 5a-5c an einer anderen Stelle des Bogenabschnitts δ befinden und entsprechend der Einsatz 1' im Durchmesser verändert ist. Insgesamt ist dadurch die Haltekraft, mit welcher das Matrizenteil 1', 20' am Patrizenteil 50' gehalten ist, präzise einstellbar.

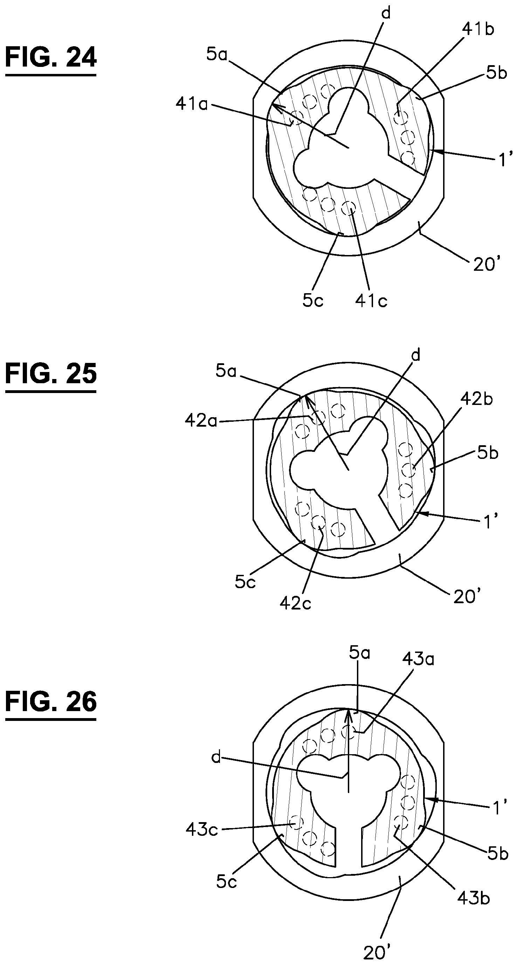

Für das vorliegende Ausführungsbeispiel zeigen Figuren 24-26 die verschiedenen Einrastpositionen des Einsatzes 1': In der ersten Einrastposition gemäss Fig. 24 befinden sich die Noppen 15a-15c in den Dellen 41a-41c, in der zweiten Einrastposition gemäss Fig. 25 sind sie in den Dellen 42a-42c und in der dritten Einrastposition gemäss Fig. 25 in den Dellen 43a-43c. Der Abstand d nimmt dabei jeweils ab, wenn der Einsatz 1' von der ersten zur zweiten und dann zur dritten Einrastposition gebracht wird. Entsprechend wird der Einsatz 1' zunehmend zusammengedrückt.

Fig. 28 zeigt einen Querschnitt einer Anordnung, bei welcher der Einsatz 1' in das Gehäuse 20' eingefügt und auf den Kopf 51 des Patrizenteils 50' aufgesetzt ist. Der Kopf 51, welcher hier im Wesentlichen gleich ausgestaltet ist wie beim Patrizenteil 50 gemäss Fig. 15, ist auch anders auslegbar.

Das hier beschriebenen Matrizenteile haben den Vorteil, dass auf einfache Weise Mittel bereitstellbar sind, um die Haltekraft, mit welcher das Patrizenteil zurückgehalten wird, zu verstellen und präzise einzustellen. Dies ist alleine durch geeignete Formgebung des Gehäuses und des Einsatzes möglich, ohne dass notwendigerweise weitere Teile vorzusehen sind, wie dies bei den bekannten aktivierbaren Varianten der Fall ist.

Aus der vorangehenden Beschreibung sind dem Fachmann zahlreiche Abwandlungen zugänglich, ohne den Schutzbereich der Erfindung zu verlassen, der durch die Ansprüche definiert ist.

Die Verstellmittel, welche durch Drehen ein Verändern des Einsatzes im Durchmesser bewirken, sind in den oben dargestellten Ausführungsbeispielen benachbart zum Gehäuseboden 25a, 25a' angeordnet. Es ist auch denkbar, die innere Seite des Gehäuses und die äussere Seite des Einsatzes so auszugestalten, dass sich die Verstellmittel in Richtung der x-Achse gesehen auf einem anderen Niveau befinden. Beispielsweise ist es denkbar, auf dem Niveau der Innenfläche 25f gemäss Figuren 7 und 27, eine Fläche vorzusehen in der Art der Fläche 25b oder 25b', und entsprechend das Niveau der Vorsprünge 5a-5c am Einsatz 1 oder 1' zur Öffnung hin versetzt anzuordnen.

Die hier dargestellten Ausführungsformen des Matrizenteils mit drei Vorsprüngen und drei Einrastpositionen ist lediglich ein Beispiel. Allgemein sind Anzahl, Form und Position der Einbuchtungen sowie der Noppen und Dellen - falls vorhanden - an die Anzahl der einstellbaren Einrastmöglichkeiten sowie an die Anzahl, Form und Position der Vorsprünge ausgelegt. In einer einfachen Ausführungsform ist z.B. eine einzelne Einbuchtung und ein einzelner Vorsprung als Verstellmittel vorgesehen und eine einzelne Noppe und zwei Dellen als Rastmittel, so dass sich zwei Einrastpositionen ergeben, in welcher der Einsatz unterschiedlich stark zusammengedrückt ist. Auch ist eine komplementäre Anordnung möglich, bei welcher ein oder mehrere Einbuchtungen und/oder eine oder mehrere Dellen an der äusseren Seite des Einsatzes und ein oder mehrere Vorsprünge und/oder eine oder mehrere Noppen an der inneren Seite des Gehäuses vorgesehen sind.

Die innere Seite des Einsatzes ist an die entsprechende Form des eingesetzten Patrizenteils ausgelegt. So kann der Einsatz beispielsweise so gestaltet sein, dass in der Ausnehmung ein anderer Teil des Patrizenteils als der Kopf aufnehmbar ist. Z.B. ist die Durchgangsöffnung so geformt, dass der Kopf des Patrizenteils hindurchführbar und im Gehäuse aufnehmbar ist, so dass im zusammengesetzten Zustand der Einsatz einen zwischen den beiden Enden angeordneten Bereich des Patrizenteils umschliesst.

## Patentansprüche

1. Matrizenteil zur Bildung einer lösbaren Verbindung mit einem im Mund befestigbaren Patrizenteil (50; 50'), umfassend ein Gehäuse (20; 20'), welches an einem Zahnersatz befestigbar ist, einen in das Gehäuse einfügbaren und in Bezug auf dieses drehbaren Einsatz (1; 1') mit einer Ausnehmung (10), in welcher ein Teil (51) des Patrizenteils (50; 50') aufnehmbar ist, und am Gehäuse und am Einsatz gebildete Verstellmittel (5a-5c, 31a-31c, 32a-32c, 33a-33c; 31a'-31c'), welche beim Drehen des Einsatzes in Bezug auf das Gehäuse ein Verändern des Einsatzes im Durchmesser bewirken, wobei das Gehäuse eine innere Seite (25a-25g; 25a'-25e') und der Einsatz eine äussere Seite aufweist, wobei zur Bildung der Verstellmittel die eine Seite mindestens einen Vorsprung (5a-5c) und die andere Seite (25a-25g; 25a'-25e') mindestens eine Einbuchtung (31a-31c, 32a-32c, 33a-33c; 31a'-31c') aufweist, mit welcher der mindestens eine Vorsprung in Eingriff bringbar ist, wobei das Matrizenteil Rastmittel (5a-5c, 31a-31c, 32a-32c, 33a-33c; 15a-15c, 41a-41c, 42a-42c, 43a-43c) aufweist, welche zur Vorgabe von diskret angeordneten Einrastpositionen zwischen dem Gehäuse (20; 20') und dem Einsatz (1; 1') ausgebildet sind, und wobei bei mindestens einer Einrastposition der Einsatz mehr zusammengedrückt ist als bei mindestens einer anderen Einrastposition.

2. Matrizenteil nach Anspruch 1, wobei die Seite (25a-25g; 25a'-25e'), an welcher die mindestens eine Einbuchtung (31a-31c, 32a-32c, 33a-33c; 31a'-31c') gebildet ist, eine Hinterschneidung (25c; 25c') aufweist, um den Einsatz (1; 1') mittels Retention am Gehäuse (20; 20') zu halten, vorzugsweise ist die mindestens eine Einbuchtung in der Richtung gesehen, in welche der Einsatz (1; 1') in das Gehäuse (20; 20') einfügbar ist, hinter einer Hinterschneidung angeordnet.

3. Matrizenteil nach einem der vorangehenden Ansprüche, wobei die Verstellmittel (5a-5c, 31a-31c, 32a-32c, 33a-33c; 31a'-31c') gewindelos ausgebildet sind.

4. Matrizenteil nach einem der vorangehenden Ansprüche, wobei die mindestens eine Einbuchtung (31a-31c, 32a-32c, 33a-33c; 31a'-31c') eine Krümmung mit einem Krümmungsmittelpunkt aufweist, der radial versetzt zur Drehachse (x) angeordnet ist, um welche der Einsatz (1; 1') in Bezug auf das Gehäuse (20; 20') drehbar ist.

5. Matrizenteil nach einem der vorangehenden Ansprüche, wobei die mindestens eine Einbuchtung (31a-31c, 32a-32c, 33a-33c; 31a'-31c') an der inneren Seite (25a-25g; 25a-25e') des Gehäuses (20; 20') und der mindestens eine Vorsprung (5a-5c) an der äusseren Seite des Einsatzes (1; 1') gebildet sind.

6. Matrizenteil nach einem der vorangehenden Ansprüche, welches mindestens zwei Einbuchtungen (31a-31c, 32a-32c, 33a-33c) aufweist, die zusammen mit dem mindestens einen Vorsprung (5a-5c) als Verstell- und Rastmittel dienen.

7. Matrizenteil nach einem der Ansprüche 1-5, wobei die Rastmittel verschieden von den Verstellmitteln sind und mindestens eine Noppe (15a-15c) aufweisen, welche mit Dellen (41a-41c, 42a-42c, 43a-43c) in Eingriff bringbar ist, vorzugsweise sind die Dellen im Boden (25a') des Gehäuses (20') oder auf der dazu gegenüberliegenden Seite des eingefügten Einsatzes ausgebildet.

8. Matrizenteil nach einem der vorangehenden Ansprüche, welches mindestens zwei Einbuchtungen (31a-31c, 32a-32c, 33a-33c) aufweist, die sich in mindestens einer der folgenden Charakteristiken unterscheiden:
- Form,
- Winkelbereich (α, β, γ), über welchen sich die jeweilige Einbuchtung um die Drehachse erstreckt,
- maximaler Abstand zum Zentrum (x0) der Drehachse.

9. Matrizenteil nach einem der vorangehenden Ansprüche, wobei zwischen dem Gehäuse (20; 20') und dem darin eingesetzten Einsatz (1; 1') ein Zwischenraum (37) gebildet ist, in welchen ein Hilfsinstrument zur Handhabung des Einsatzes einfügbar ist.

10. Matrizenteil nach Anspruch 9, wobei die äussere Seite des Einsatzes (1; 1') mindestens eine Ausnehmung, insbesondere eine Nut (9), aufweist, welche Ausnehmung nach Einsetzen in das Gehäuse (20; 20') im Zwischenraum (37) liegt, und/oder der nach vorne offene Zwischenraum (37) um die Drehachse (x) herum verläuft.

11. Matrizenteil nach einem der vorangehenden Ansprüche, wobei der Einsatz (1; 1') in Richtung der Drehachse (x) gesehen eine Durchgangsöffnung (2) aufweist, welche eine zur drehfesten Verbindung mit einem Hilfsinstrument ausgestaltete Form aufweist und/oder um welche eine durchgehende oder durch einen Schlitz (3) unterbrochene Wandung (1a, 1a') verläuft.

12. Matrizenteil nach einem der vorangehenden Ansprüche, wobei der Einsatz (1; 1') eine Wandung mit einer variierenden Wandstärke aufweist zur Bildung von mindestens einer Schwächungsstelle (4a, 4b).

13. Matrizenteil nach Anspruch 12, mit mehreren Vorsprüngen (5a-5c), wobei in Richtung der Drehachse (x) gesehen die mindestens eine Schwächungsstelle (4a, 4b) zwischen zwei Vorsprüngen angeordnet ist.

14. Matrizenteil nach einem der vorangehenden Ansprüche, wobei der Einsatz aus Kunststoff, insbesondere PEAK wie PEEK oder PEKK, oder Metall, insbesondere einer Goldlegierung, gefertigt ist.

15. Verbindungssatz zur lösbaren Befestigung eines Zahnersatzes in einem Mund, umfassend ein Matrizenteil nach einem der vorangehenden Ansprüche und ein damit verbindbares Patrizenteil (50; 50'), welches vorzugsweise als Abutment, Implantat, Wurzelstift, Wurzelanker oder Element für einen Steg ausgebildet ist.

16. Verbindungssatz nach Anspruch 15, wobei die Aussenfläche (51a, 51b), welche das Kopfende (50a) des Patrizenteils (50; 50') in axialer Richtung abschliesst, eben und/oder konvex geformt ist.

## Claims

1. Female part for forming a releasable connection to a male part (50; 50') that can be fastened in the mouth, comprising a housing (20; 20'), which can be fastened to a dental prosthesis, an insert (1; 1') being insertable into the housing and rotatable with respect thereto and having a clearance (10), in which a portion (51) of the male part (50; 50') can be received, and adjustment means (5a-5c, 31a-31c, 32a-32c, 33a-33c; 31a'-31c'), which are formed on the housing and on the insert and which cause a change in the diameter of the insert when the insert is rotated with respect to the housing, wherein the housing has an inner side (25a-25g; 25a'-25e') and the insert has an outer side, wherein, for forming the adjusting means, one side comprises at least one protrusion (5a-5c) and the other side (25a-25g; 25a'-25e') at least one recess (31a-31c, 32a-32c, 33a-33c; 31a'-31c'), with which the at least one protrusion is engageable, wherein the female part comprises locking means (5a-5c, 31a-31c, 32a-32c, 33a-33c; 15a-15c, 41a-41c, 42a-42c, 43a-43c), which are formed between the housing (20; 20') and the insert (1; 1') for defining discretely arranged locking positions, and wherein the insert is compressed more in at least one locking position than in at least one other locking position.

2. Female part according to claim 1, wherein the side (25a-25g; 25a'-25e') on which the at least one recess (31a-31c, 32a-32c, 33a-33c; 31a'-31c') is formed comprises an undercut (25c; 25c') to hold the insert (1; 1') on the housing (20; 20') by retention, preferably the at least one recess, as seen in the direction in which the insert (1; 1') is insertable into the housing (20; 20'), is arranged behind an undercut.

3. Female part according to any one of the preceding claims, wherein the adjusting means (5a-5c, 31a-31c, 32a-32c, 33a-33c; 31a'-31c') are formed without a thread.

4. Female part according to any one of the preceding claims, wherein the at least one recess (31a-31c, 32a-32c, 33a-33c; 31a'-31c') has a curvature with a center of curvature that is situated radially offset from the axis of rotation (x) about which the insert (1; 1') is rotatable with respect to the housing (20; 20').

5. Female part according to any one of the preceding claims, wherein the at least one recess (31a-31c, 32a-32c, 33a-33c; 31a'-31c') is formed on the inner side (25a-25g; 25a-25e') of the housing (20; 20') and the at least one protrusion (5a-5c) is formed on the outer side of the insert (1; 1').

6. Female part according to any one of the preceding claims, which comprises at least two recesses (31a-31c, 32a-32c, 33a-33c), which, together with the at least one protrusion (5a-5c), serve as adjusting means and locking means.

7. Female part according to any one of claims 1-5, wherein the locking means are different from the adjusting means and comprise at least one nub (15a-15c), which is engageable with dents (41a-41c, 42a-42c, 43a-43c), the dents preferably being formed in the bottom (25a') of the housing (20') or on the side of the inserted insert opposite thereto.

8. Female part according to any one of the preceding claims, comprising at least two recesses (31a-31c, 32a-32c, 33a-33c), which differ in at least one of the following characteristics:
- shape,
- angle range (α, β, γ), over which the respective recess extends about the axis of rotation,
- maximum distance from the center (x0) of the axis of rotation.

9. Female part according to any one of the preceding claims, wherein an interspace (37) is formed between the housing (20; 20') and the insert (1; 1') inserted therein, an auxiliary instrument for handling the insert being insertable into this interspace.

10. Female part according to claim 9, wherein the outer side of the insert (1; 1') comprises at least one depression, in particular a groove (9), said depression being situated in the interspace (37) after being inserted into the housing (20; 20') and/or the interspace (37), which is open toward the front, extends around the axis of rotation (x).

11. Female part according to any one of the preceding claims, wherein the insert (1; 1') comprises, as seen in the direction of the axis of rotation (x), a through-opening (2), which has a shape for a rotationally fixed connection to an auxiliary instrument and/or around which there extends a wall (1a, 1a') that is continuous or is interrupted by a slot (3).

12. Female part according to any one of the preceding claims, wherein the insert (1; 1') comprises a wall with a varying wall thickness for forming at least one weakened area (4a, 4b).

13. Female part according to claim 12, comprising multiple protrusions (5a-5c), wherein the at least one weakened area (4a, 4b) is arranged between two protrusions, as seen in the direction of the axis of rotation (x).

14. Female part according to any one of the preceding claims, wherein the insert is made of plastic, in particular PEAK such as PEEK or PEKK, or a metal, in particular a gold alloy.

15. Connecting set for releasable attachment of a dental prosthesis in a mouth, comprising a female part according to any one of the preceding claims and a male part (50; 50'), which can be connected thereto and which is preferably formed as an abutment, an implant, a root pin, a root anchor or an element for a bar.

16. Connecting set according to claim 15, wherein the outside surface (51a, 51b), which finishes the head end (50a) of the male part (50; 50') in the axial direction, has a planar and/or convex shape.

## Revendications

1. Partie femelle destinée à former une liaison amovible avec une partie mâle (50; 50') pouvant être fixée dans la bouche, comprenant un boîtier (20; 20') pouvant être fixé à une prothèse dentaire, un insert (1; 1') insérable dans le boîtier et rotatif par rapport à celui-ci, lequel présente un évidement (10) pouvant recevoir une partie (51) de la partie mâle (50; 50'), ainsi que des moyens d'ajustement (5a-5c, 31a-31c, 32a-32c, 33a-33c; 31a'-31c') formés sur le boîtier et sur l'insert, lesquels entraînent une variation en diamètre de l'insert lors d'une rotation de l'insert par rapport au boîtier, où le boîtier présente un côté intérieur (25a-25g; 25a'-25e') et l'insert présente un côté extérieur, où pour former les moyens d'ajustement, l'un des côtés présente au moins une saillie (5a-5c) et l'autre côté (25a-25g; 25a'-25e') au moins une échancrure (31a-31c, 32a-32c, 33a-33c; 31a'-31c') avec laquelle ladite au moins une saillie peut être mise en engagement, où la partie femelle présente des moyens d'encliquetage (5a-5c, 31a-31c, 32a-32c, 33a-33c; 15a-15c, 41a-41c, 42a-42c, 43a-43c) formés de manière à définir des positions d'encliquetage agencées de manière discrète entre le boîtier (20; 20') et l'insert (1; 1'), et où l'insert est comprimé davantage dans au moins une des positions d'encliquetage que dans au moins une autre position d'encliquetage.

2. Partie femelle selon la revendication 1, où le côté (25a-25g; 25a'-25e') où est formée ladite au moins une échancrure (31a-31c, 32a-32c, 33a-33c; 31a'-31c') présente une contre-dépouille (25c; 25c') afin de retenir l'insert (1; 1') sur le boîtier (20; 20') par rétention, ladite au moins une échancrure, vue dans la direction dans laquelle l'insert (1; 1') est insérable dans le boîtier (20; 20'), est préférablement agencée derrière une contre-dépouille.

3. Partie femelle selon l'une des revendications précédentes, où les moyens d'ajustement (5a-5c, 31a-31c, 32a-32c, 33a-33c; 31a'-31c') sont réalisés sans filetage.

4. Partie femelle selon l'une des revendications précédentes, où ladite au moins une échancrure (31a-31c, 32a-32c, 33a-33c; 31a'-31c') présente une courbure ayant un centre de courbure qui est agencé de manière radialement décalée par rapport à l'axe de rotation (x) autour duquel l'insert (1; 1') peut tourner par rapport au boîtier (20; 20').

5. Partie femelle selon l'une des revendications précédentes, où ladite au moins une échancrure (31a-31c, 32a-32c, 33a-33c; 31a'-31c') est formée sur le côté intérieur (25a-25g; 25a-25e') du boîtier (20; 20') et ladite au moins une saillie (5a-5c) sur le côté extérieur de l'insert (1; 1').

6. Partie femelle selon l'une des revendications précédentes, laquelle présente au moins deux échancrures (31a-31c, 32a-32c, 33a-33c) qui servent de moyen d'ajustement et d'encliquetage avec ladite au moins une saillie (5a-5c).

7. Partie femelle selon l'une des revendications 1 à 5, où les moyens d'encliquetage sont distincts des moyens d'ajustement et présentent au moins une bosse (15a-15c) pouvant être mise en engagement avec des creux (41a-41c, 42a-42c, 43a-43c), les creux sont préférablement formés dans le fond (25a') du boîtier (20') ou sur le côté y opposé de l'insert inséré.

8. Partie femelle selon l'une des revendications précédentes, laquelle présente au moins deux échancrures (31a-31c, 32a-32c, 33a-33c) qui se distinguent par rapport à l'une au moins des caractéristiques suivantes:
- forme,
- plage angulaire (α, β, γ) sur laquelle s'étend l'échancrure respective autour de l'axe de rotation,
- distance maximale du centre (x0) de l'axe de rotation.

9. Partie femelle selon l'une des revendications précédentes, où entre le boîtier (20; 20') et l'insert y inséré (1; 1') est formé un interstice (37) dans lequel est insérable un instrument auxiliaire pour le maniement de l'insert.

10. Partie femelle selon la revendication 9, où le côté extérieur de l'insert (1; 1') présente au moins un évidement, plus particulièrement une rainure (9), lequel évidement est situé après son insertion dans le boîtier (20; 20') dans l'interstice (37), et/ou l'interstice (37), ouvert vers l'avant, s'étend autour de l'axe de rotation (x).

11. Partie femelle selon l'une des revendications précédentes, où l'insert (1; 1') présente, vu dans la direction de l'axe de rotation (x), une ouverture de passage (2) ayant une forme conçue en vue d'une liaison solidaire en rotation avec un instrument auxiliaire, et/ou autour de laquelle s'étend une paroi (1a, 1a') continue ou interrompue par une fente (3).

12. Partie femelle selon l'une des revendications précédentes, où l'insert (1; 1') présente une paroi ayant une épaisseur de paroi variable afin de former au moins une zone d'affaiblissement (4a, 4b).

13. Partie femelle selon la revendication 12, présentant plusieurs saillies (5a-5c), où ladite au moins une zone d'affaiblissement (4a, 4b), vue dans la direction de l'axe de rotation (x), est agencée entre deux saillies.

14. Partie femelle selon l'une des revendications précédentes, où l'insert est fabriqué en matière synthétique, plus particulièrement en PAEK tel que PEEK ou PEKK, ou en métal, plus particulièrement en un alliage d'or.

15. Ensemble de liaison pour la fixation amovible d'une prothèse dentaire dans la bouche, comprenant une partie femelle selon l'une des revendications précédentes et une partie mâle (50; 50') pouvant y être fixée et qui est préférablement réalisée sous la forme d'un pilier, implant, tenon radiculaire, ancrage radiculaire ou élément pour une barre.

16. Ensemble de liaison selon la revendication 15, où la surface extérieure (51a, 51b) qui termine l'extrémité de tête (50a) de la partie mâle (50; 50') dans la direction axiale présente une forme plate et/ou convexe.
